(19) **Europäisches Patentamt / European Patent Office / Office européen des brevets**

(11) **EP 4 604 643 A1**

(12) **EUROPEAN PATENT APPLICATION**
published in accordance with Art. 153(4) EPC

(43) Date of publication:
**20.08.2025 Bulletin 2025/34**

(21) Application number: **23876810.5**

(22) Date of filing: **13.10.2023**

(51) International Patent Classification (IPC):
**H04W 72/12** (2023.01)

(52) Cooperative Patent Classification (CPC):
**H04W 72/044; H04W 72/0446; H04W 72/0453; H04W 72/12; H04W 74/0833; H04W 76/27; H04W 76/28**

(86) International application number:
**PCT/CN2023/124459**

(87) International publication number:
**WO 2024/078611 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.10.2022 CN 202211258304**

(71) Applicant: **Vivo Mobile Communication Co., Ltd.
Dongguan, Guangdong 523863 (CN)**

(72) Inventors:
- **HONG, Qi
  Dongguan, Guangdong 523863 (CN)**
- **LI, Gen
  Dongguan, Guangdong 523863 (CN)**

(74) Representative: **Lavoix
Bayerstraße 83
80335 München (DE)**

(54) **INFORMATION CONFIGURATION METHOD AND APPARATUS, TERMINAL, AND NETWORK SIDE DEVICE**

(57) This application discloses an information configuration method and apparatus, a terminal, and a network-side device, and pertains to the communication field. An information configuration method according to an embodiment of this application includes: receiving, by a terminal, paging downlink control information DCI sent by a network-side device; and obtaining, by the terminal, system configuration information based on the paging DCI; where the system configuration information includes at least one of the following configuration parameters: a synchronization signal and physical broadcast channel block SSB period; a synchronization signal block measurement timing configuration SMTC period; SSB transmission configuration information; physical random access channel PRACH configuration index information; paging discontinuous reception DRX configuration information; and period configuration information of a common signal.

FIG. 4

**Description**

**CROSS-REFERENCE TO RELATED APPLICATIONS**

This application claims priority to Chinese Patent Application No. 202211258304.9, filed in China on October 13, 2022, which is incorporated herein by reference in its entirety.

**TECHNICAL FIELD**

This application pertains to the field of communication technology, and specifically relates to an information configuration method and apparatus, a terminal, and a network-side device.

**BACKGROUND**

New radio (New Radio, NR) user equipment (User Equipment, UE) can be in one of three radio resource control (Radio Resource Control, RRC) states: an RRC idle state (RRC_IDLE), an RRC connected state (RRC_CONNECTED), and an RRC inactive state (RRC_INACTIVE). In the RRC_IDLE and RRC_INACTIVE states, the UE cannot perform data transmission with a network-side device. In such states, if the network-side device dynamically modifies system parameters, such as modifying a synchronization signal and physical broadcast channel block (Synchronization Signal and Physical broadcast channel block, SSB) period, a synchronization signal block measurement timing configuration (Synchronization Signal block Measurement Timing Configuration, SMTC) period, SSB transmission configuration, and the like, the UE cannot be notified of the modification in a timely manner, causing the UE to fail to adjust monitoring parameters in a timely manner. This may result in UE access delay and affect communication performance.

**SUMMARY**

Embodiments of this application provide an information configuration method and apparatus, a terminal, and a network-side device, so as to solve a prior-art problem of access delay caused by failure to promptly notify the terminal that the network-side dynamically adjusts system parameters.

According to a first aspect, an information configuration method is provided, applied to a terminal. The method includes:

receiving, by the terminal, paging downlink control information (Downlink Control Information, DCI) sent by a network-side device; and
obtaining, by the terminal, system configuration information based on the paging DCI; where
the system configuration information includes at least one of the following configuration parameters:

a synchronization signal and physical broadcast channel block SSB period;
a synchronization signal block measurement timing configuration SMTC period;
SSB transmission configuration information;
physical random access channel (Physical Random Access Channel, PRACH) configuration index information;
paging discontinuous reception (Discontinuous Reception, DRX) configuration information; and
period configuration information of a common signal.

According to a second aspect, an information configuration apparatus is provided, applied to a terminal, including:

a receiving module, configured to receive paging DCI sent by a network-side device; and
an obtaining module, configured to obtain system configuration information based on the paging DCI; where
the system configuration information includes at least one of the following configuration parameters:

an SSB period;
an SMTC period;
SSB transmission configuration information;
PRACH configuration index information;
paging DRX configuration information; and
period configuration information of a common signal.

According to a third aspect, an information configuration method is provided, applied to a network-side device. The method includes:

sending, by the network-side device, paging DCI to a terminal, where the paging DCI and/or a physical downlink shared channel (Physical downlink shared channel, PDSCH) scheduled by the paging DCI indicates system configuration information; where
the system configuration information includes at least one of the following configuration parameters:

an SSB period;
an SMTC period;
SSB transmission configuration information;
PRACH configuration index information;
paging DRX configuration information; and
period configuration information of a common signal.

According to a fourth aspect, an information configuration apparatus is provided, applied to a network-side device, including:

a sending module, configured to send paging DCI to a terminal, where the paging DCI and/or a PDSCH scheduled by the paging DCI indicates system configuration information; where
the system configuration information includes at least one of the following configuration parameters:

an SSB period;
an SMTC period;
SSB transmission configuration information;
PRACH configuration index information;
paging DRX configuration information; and
period configuration information of a common signal

According to a fifth aspect, a terminal is provided. The terminal includes a processor and a memory, where the memory stores a program or instructions capable of running on the processor, and when the program or instructions are executed by the processor, the steps of the method according to the first aspect are implemented.

According to a sixth aspect, a terminal is provided, including a processor and a communication interface. The communication interface is configured to receive paging downlink control information DCI sent by a network-side device. The processor is configured to obtain system configuration information based on the paging DCI; where the system configuration information includes at least one of the following configuration parameters: an SSB period; an SMTC period; SSB transmission configuration information; PRACH configuration index information; paging DRX configuration information; and period configuration information of a common signal.

According to a seventh aspect, a network-side device is provided. The network-side device includes a processor and a memory, where the memory stores a program or instructions capable of running on the processor, and when the program or instructions are executed by the processor, the steps of the method according to the third aspect are implemented.

According to an eighth aspect, a network-side device is provided, including a processor and a communication interface. The communication interface is configured to send paging DCI to a terminal, where the paging DCI and/or a PDSCH scheduled by the paging DCI indicates system configuration information; where the system configuration information includes at least one of the following configuration parameters: an SSB period; an SMTC period; SSB transmission configuration information; PRACH configuration index information; paging DRX configuration information; and period configuration information of a common signal.

According to a ninth aspect, an information configuration system is provided, including a terminal and a network-side device, where the terminal can be configured to perform the steps of the information configuration method according to the first aspect, and the network-side device can be configured to perform the steps of the information configuration method according to the third aspect.

According to a tenth aspect, a readable storage medium is provided, where the readable storage medium stores a program or instructions, and when the program or instructions are executed by a processor, the steps of the method according to the first aspect are implemented, or the steps of the method according to the third aspect are implemented.

According to an eleventh aspect, a chip is provided. The chip includes a processor and a communication interface, where the communication interface is coupled to the processor, and the processor is configured to run a program or instructions to implement the steps of the method according to the first aspect or the steps of the method according to the third aspect.

According to a twelfth aspect, a computer program/program product is provided, where the computer program/-program product is stored in a storage medium, and the computer program/program product is executed by at least one processor to implement the steps of the information configuration method according to the first aspect, or to implement the steps of the information configuration method according to the third aspect.

In the embodiments of this application, the terminal can obtain system parameter configuration information each time it receives the paging DCI sent by the network-side device, thereby promptly obtaining changes in system parameters or configurations. This enables the terminal to promptly adjust the parameters to be monitored, avoiding access delay and preventing impact on communication performance.

## BRIEF DESCRIPTION OF DRAWINGS

FIG. 1 is a block diagram of a wireless communication system to which embodiments of this application are applicable;
FIG. 2 is a schematic diagram of state transition relationships according to an embodiment of this application;
FIG. 3 is a schematic diagram of SSB transmission according to an embodiment of this application;
FIG. 4 is a first schematic flowchart of an information configuration method according to an embodiment of this application;
FIG. 5 is a schematic diagram a first time according to an embodiment of this application;
FIG. 6 is a second schematic flowchart of an information configuration method according to an embodiment of this application;
FIG. 7 is a first schematic structural diagram of an information configuration apparatus according to an embodiment of this application;
FIG. 8 is a second schematic structural diagram of an information configuration apparatus according to an embodiment of this application;
FIG. 9 is a schematic structural diagram of a communication device according to an embodiment of this application;
FIG. 10 is a schematic structural diagram of a terminal according to an embodiment of this application; and
FIG. 11 is a schematic structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

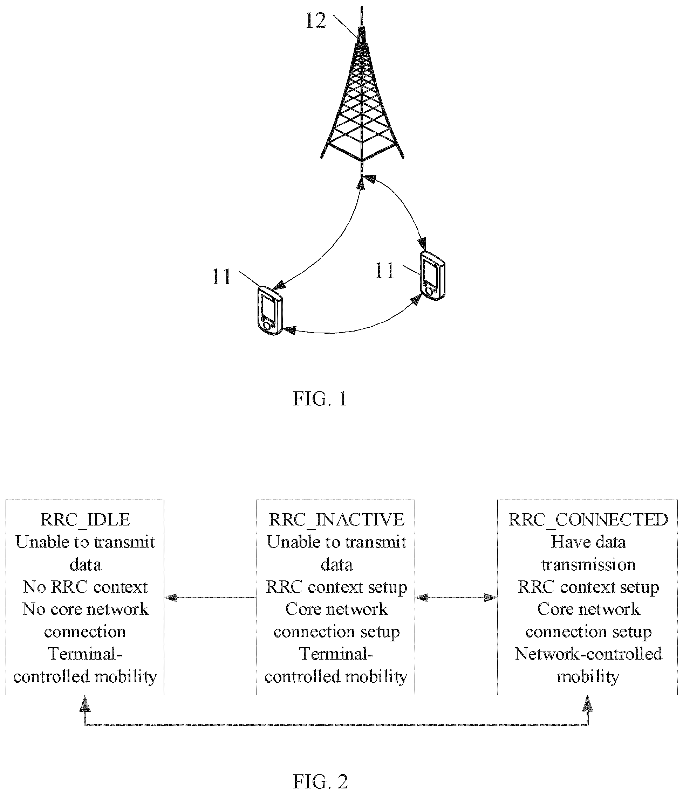

FIG. 1 is a block diagram of a wireless communication system to which the embodiments of this application are applicable. The wireless communication system includes a terminal 11 and a network-side device 12. The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart household (home devices with wireless communication functions, such as refrigerators, televisions, washing machines, or furniture), a game console, a personal computer (personal computer, PC), a teller machine, or a self-service machine. The wearable device includes a smartwatch, a smart band, smart earphones, smart glasses, smart jewelry (a smart bracelet, a smart hand chain, a smart ring, a smart necklace, a smart leglet, a smart anklet, and the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, WiFi) node, or the like. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or other suitable terms in the field. Provided that the same technical effect is achieved, the base station is not limited to specific technical terms. It should be noted that in the embodiments of this application, only the base station in the NR system is used as an example, but the specific type of the base station is not limited.

The following describes in detail the information configuration method and apparatus provided in the embodiments of this application through some embodiments and their application scenarios with reference to the accompanying drawings.

For description of the embodiments of this application, some concepts used in the following description are first described.

I. RRC states

An NR UE can be in one of three RRC states: RRC_IDLE, RRC_CONNECTED, and RRC_INACTIVE.

For RRC_IDLE, no RRC connection is established between the UE and a base station.

For RRC_CONNECTED and RRC_INACTIVE, an RRC connection has been established between the UE and the base station.

The transition relationships among the three states are shown in FIG. 2.

(1) RRC_IDLE state:

UE in the IDLE state:

① A network node (Node B, NB) has no context information of the UE, that is, the NB does not know the existence of the UE.
② No RRC connection exists between the UE and the NB.
③ A unique identifier has been assigned within a tracking area (Tracking Area, TA) where the UE is located.
④ The UE registers with a mobility management entity (Mobility Management Entity, MME), and the MME has the context.
⑤ No non-access stratum (Non-Access Stratum, NAS) signaling connection exists between the UE and a core network.

An upper layer may configure a specific DRX for the terminal in the idle state to periodically wake up to receive possible paging messages from a network.

The terminal controls mobility based on network configuration, that is, the terminal implements mobility management through cell reselection.

behaviors:

① Monitors short messages transmitted on a physical downlink control channel (Physical downlink control channel, PDCCH), such as a paging radio network temporary identifier (Paging Radio Network Temporary Identifier, P-RNTI).
② Monitors core network (Core Network, CN) paging, for example, monitors a 5G S-temporary mobile subscription identifier (5G S-Temporary Mobile Subscription Identifier, 5G-S-TMSI).

③ Performs neighboring cell measurement, cell selection, or cell reselection.

(4) Obtains system messages and sends system information (System Information, SI) request messages (if the system messages are configured, performs this step).

⑤ Records measurement data that contains location (location) and time (time) information based on measurement recording configuration.

(2) RRC_INACTIVE state

A UE in the RRC_INACTIVE state not only includes all behaviors in the RRC_IDLE state, but also needs to store the inactive access stratum (Access Stratum, AS) context (context) of the UE and implement synchronization with a radio access network (Radio Access Network, RAN) area.

A UE-specific DRX may be configured by upper layers or by the RRC layer (A UE specific DRX may be configured by upper layers or by RRC layer).

A RAN-based notification area is configured by the RRC layer (A RAN-based notification area is configured by RRC layer).

The UE controls mobility based on network configuration (UE controlled mobility based on network configuration).

The UE stores the inactive AS context of the UE.

UE behaviors:

Monitors short messages transmitted with P-RNTI over downlink control information (Downlink Control Information, DCI) (Monitors Short Messages transmitted with P-RNTI over DCI);

Monitors CN paging (which may include a 5G S-temporary mobile subscription identifier (Temporary Mobile Subscription Identifier, 5G-S-TMSI)) or RAN paging (which may include a full inactive RNTI (full Inactive RNTI, full I-RNTI));

Performs neighboring cell measurement and cell selection or reselection;

Performs RAN-based notification area update (RAN-based Notification Area Update, RNAU) periodically, or performs RNAU when leaving the configured RAN; and

Obtains system messages and sends system message request messages (if obtaining system messages is supported, performs this step).

(3) RRC_CONNECTED state

(1) The AS context is stored in the NG-RAN and UE.

② Data can be transmitted.

③ At lower layers, the UE can be configured with a UE-specific DRX.

(4) For a terminal supporting carrier aggregation (Carrier Aggregation, CA), one or more secondary cells (Secondary Cell, SCell) are aggregated with a special cell (Special Cell, SpCell) to increase the bandwidth.

⑤ For a terminal supporting dual connectivity (Dual Connectivity, DC), one secondary cell group (Secondary Cell Group, SCG) is aggregated with a master cell group (Master Cell Group, MCG) to increase the bandwidth.

⑥ The network side controls intra- or inter-NR system mobility.

UE behaviors:

Monitors short messages transmitted on the physical downlink control channel (Physical downlink control channel, PDCCH) (P-RNTI);

Monitors control channels related to shared data channels to sense whether there is related scheduling data;

Reports channel quality information to the network side;

Performs neighboring cell measurement and reports measurement reports;

Obtains system messages; and

Performs minimization of drive tests (Minimization of Drive Tests, MDT).

II. Paging (Paging)

(1) Paging purpose

Description 1:

Sends core network-initiated paging messages to UEs in the RRC_IDLE or RRC_INACTIVE state;
Sends access network-initiated paging messages to UEs in the RRC_INACTIVE state;
Notifies UEs in the RRC_IDLE, RRC_INACTIVE, or RRC_CONNECTED state of system message changes;
Notifies UEs in the RRC_IDLE, RRC_INACTIVE, or RRC_CONNECTED state of earthquake and tsunami warning system (Earthquake and Tsunami Warning System, ETWS) primary notifications and ETWS secondary notifications;
Notifies UEs in the RRC_IDLE, RRC_INACTIVE, or RRC_CONNECTED state of information about commercial mobile alert service (Commercial Mobile Alert Service, CMAS) notifications;
Notifies UEs in the RRC_IDLE state or UEs connected to the 5G core network (5G Core Network, 5GC) of embedded array block (Embedded Array Block, EAB) parameter modifications; and
Notifies UEs in the RRC_IDLE or RRC_INACTIVE state to perform evolved universal mobile telecommunications system (Universal Mobile Telecommunications System, UMTS) terrestrial radio access network (Evolved Universal Terrestrial Radio Access Network, E-UTRAN) inter-frequency reconfiguration procedures.

Description 2:

Sends paging messages to UEs in the RRC_IDLE or RRC_INACTIVE state.
For the above two paging purpose descriptions, the difference between 5G and 4G is that 5G uses the short message (Short Message) field in DCI format 1_0 to indicate system message changes and earthquake and tsunami warning system (Earthquake and Tsunami Warning System, ETWS) notifications.

(2) Paging classification

In terms of message sources, paging can be classified into:

a: 5GC paging, from 5GC: In the RRC_IDLE state, in a case that there is downlink data arriving at a UE in the RRC_IDLE state, 5GC notifies the UE through a paging (paging) message.
b: RAN paging, from gNB: In a case that there is downlink data arriving at a UE in the RRC_INACTIVE state, the gNB notifies, through a RAN paging (paging) message, the UE to start data transmission. Final paging messages are all delivered to the UE by the gNB through the air interface.

(3) Paging channel

The physical layer channel corresponding to paging is a physical downlink shared channel (Physical Downlink Shared Channel, PDSCH). The PDSCH is scheduled using DCI format 1-0 scrambled with P-RNTI (with the value being 0xFFFF).
The following information is transmitted through DCI format 1_0, with the cyclic redundancy check (CRC) scrambled by P-RNTI.
① Short messages indicator (Short Messages Indicator): 2 bits (bits) specified in Table 1.

**Table 1: Short messages indicator**

| Bit field | Short messages indicator |
|-----------|--------------------------|
| 00 | Reserved |
| 01 | Only paging scheduling information exists in the DCI. |
| 10 | Only short messages exist in the DCI. |
| 11 | The scheduling information for both paging and short messages exists in the DCI. |

② Short message - 8 bits, as shown in Table 2. If only paging scheduling information is carried, this bit field is reserved.

**Table 2: Short message**

| Bit | Short message |
|---|---|
| 1 | System information modification:<br>If the value is set to 1: it indicates modification of the broadcast control channel (Broadcast Control Channel, BCCH) except SIB6, SIB7, and SIB8. |
| 2 | ETWS and CMAS indicator:<br>If the value is set to 1: it indicates ETWS primary notification and/or ETWS secondary notification and/or CMAS notification. |
| 3 | Paging monitoring stop:<br>This bit can only be used for shared spectrum channel access operations if "nRPDCCH MonitoringOccasionPerSSB InPO" exists.<br>If the value is set to 1: it indicates that the UE may stop monitoring PDCCH events according to protocol specifications, in order to perform paging at this paging occasion. |
| 4 | System information modification - eDRX:<br>If the value is set to 1: it indicates modification of BCCH except SIB6, SIB7, and SIB8. This indicator only applies to UEs using an eDRX period longer than the BCCH modification period. |
| 5-8 | These bits are not used in this embodiment. If these bits are received, the UE ignores them. |

Bit 1 indicates that the change of system messages other than ETWS/CMAS messages (SIB6, SIB7, and SIB8) is triggered. Bit 2 indicates that the change of ETWS/CMAS messages (SIB6, SIB7, and SIB8) is triggered.

③ Frequency domain resource allocation - bits. If only short messages are carried, this bit field is reserved.

(4) Size of control resource set 0 (CORESET 0)

⑤ Time domain resource allocation - 4 bits. If only short messages are carried, this bit field is reserved.

⑥ VRB-to-PRB mapping - 1 bit. If only short messages are carried, this bit field is reserved.

⑦ Modulation and coding scheme - 5 bits. If only short messages are transmitted, this bit field is reserved.

⑧ TB scaling - 2 bits. If only short messages are carried, this bit field is reserved.

⑨ TRS availability indicator - 1, 2, 3, 4, 5, or 6 bits, where the number of bits equals 1 plus the maximum value of all bit IDs provided by the TRS resource set configuration (if configured); otherwise, the number of bits is 0.

⑩ Reserved bits - (8-X) bits are used for operations in cells with shared spectrum channel access in frequency range 1, or operations in cells in frequency range 2-2; and (6-X) bits are used for operations in cells without shared spectrum channel access, where the value of X is the number of bits for the "TRS availability indicator" field.

(4) Paging process

A UE in the RRC_IDLE or RRC_INACTIVE state can use DRX to receive paging messages to reduce power consumption. With DRX, the UE in the RRC_IDLE or RRC_INACTIVE state "wakes up" only during the predetermined time period to receive paging messages, but can remain in "sleep" mode and stop receiving paging at other times, thereby reducing power consumption and extending battery life of the UE.

For paging DRX, the UE in the RRC_IDLE or RRC_INACTIVE state attempts to receive a P-RNTI scrambled PDCCH only at a specific paging occasion within each DRX cycle (DRX cycle). A paging occasion (Paging Occasion, PO) is a set of PDCCH monitoring occasions (PDCCH monitoring occasion) and includes multiple slots (slot). The UE monitors possible P-RNTI scrambled PDCCHs at this PO. A paging frame (Paging Frame, PF) is a radio frame that may contain one or more POs or contain a starting point of one PO.

The PF is a system frame (System frame number, SFN) that meets the following formula:

$$(\text{SFN} + \text{PF\_offset})\,\text{mod}\,T = (T\,\text{div}\,N) * (\text{UE\_ID}\,\text{mod}\,N)$$

One PF contains $N_s$ POs. The UE can determine, through an index i_s, which PO within the PF is used. i_s is obtained using the following formula:

$$i\_s = \text{floor}\left(\frac{\text{UE\_ID}}{N}\right)\text{mod}\,N_s$$

T represents the DRX cycle ultimately used by the UE. PF_offset is used to determine the PF, and its value is specified by "PCCH-Config->nAndPagingFrameOffset" in SIB1. N is used to determine how many PFs are included in each DRX cycle, and its value is specified by "PCCH-Config->nAndPagingFrameOffset" in SIB1. $N_s$ represents how many POs correspond to each PF, and its value is specified by "PCCH-Config->ns" in SIB1. UE_ID=5G-S-TMSI mod 1024, where the actual value of UE_ID is the lowest 10 bits of 5G-S-TMSI.

Position of the first PDCCH monitoring occasion of each PO within one PF: For the paging on the initial downlink bandwidth part (Bandwidth Part, BWP), its value is specified by "PCCH-Config->firstPDCCH-MonitoringOccasionOfPO" in SIB1. For the paging on other downlink BWPs except the initial downlink BWP, its value is specified by "PCCH-ConfigCommon->firstPDCCH-MonitoringOccasionOfPO" of the corresponding BWP.

The DRX cycle is configured by the network-side device in the following three ways:

1. For CN-initiated paging, a cell broadcasts a default cycle through a default paging cycle (defaultPagingCycle) in SIB1.
2. For CN-initiated paging, the NAS layer can configure a UE-specific cycle through an information element (Information element, IE), Paging DRX.
3. For RAN-initiated paging, a cell configures a UE-specific cycle by having a RAN paging cycle (ran-PagingCycle) carried in an RRC release message when an RRC connection is suspended.

The UE in the RRC_IDLE state uses a minimum value of the first two cycle configurations as the final DRX cycle to be used (corresponding to the T value in the formula). For the UE in the RRC_IDLE state, if the NAS layer has not configured a UE-specific DRX cycle for the UE, the "defaultPagingCycle" configured in SIB1 is used.

(5) Time for UE to receive new system messages

The network configures a modification period (modification period). The modification period is an integer multiple of the paging cycle, and the multiple, namely the modification period coefficient (modificationPeriodCoefl), is configured in SIB1. For example, if the multiple is set to n4, the modification period is 4 paging cycles.

III. SSB

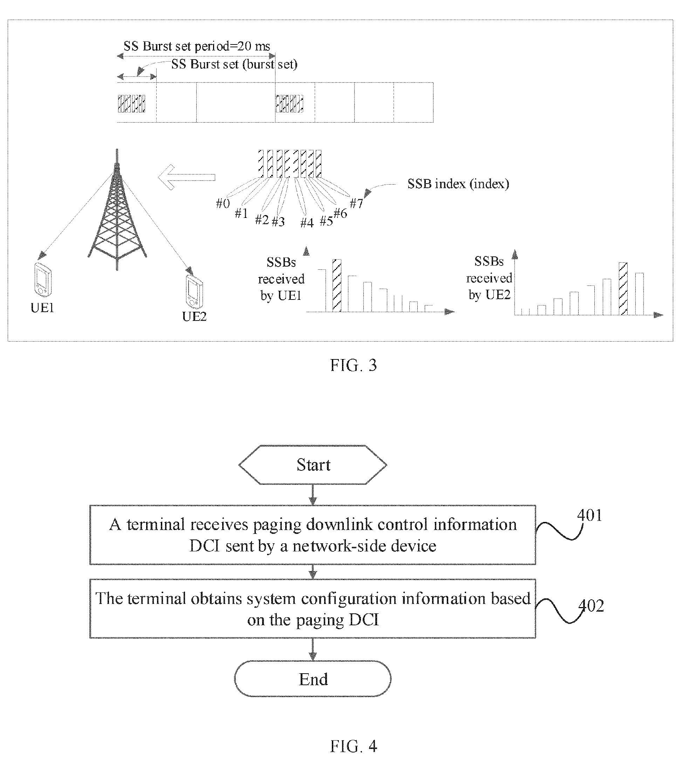

SSBs are sent using beams. Because the beams are narrow, in NR, a same SSB is sent in the form of beams to different directions in time division multiplexing (Time Division Multiplexing, TDM) mode so that UEs in all directions can receive the SSB, as shown in FIG. 3.

As shown in FIG. 3, within a range of 5 ms, a base station sends multiple SSBs (corresponding to different SSB indexes) to cover different directions. The UE receives multiple SSBs with different signal strengths and selects the strongest one as its own SSB beam.

In this embodiment, within 5 ms, the base station sends a series of SSBs to various directions. This series of SSBs is an SS burst set (SS burst set). A repetition period of the SS burst set is an SS burst set period, which is 20 ms by default in 5G. From the ServingCellConfigurationCommon IE (ServingCellConfigCommon IE), it can be seen that the SSB period range is, for example, {ms5, ms10, ms20, ms40, ms80, ms160}. The terminal performs SSB monitoring once every 20 ms by default.

IV. PRACH

A PRACH is used to transmit a preamble (preamble). Only one preamble can be transmitted at each PRACH occasion (PRACH occasion, RO), but multiple UEs can transmit different preambles at a same RO.

The preamble transmission of one cell is in a set of PRACH slots. One PRACH slot may contain multiple ROs in time domain, and each RO is used to transmit a preamble of a specific format. A time domain resource for transmitting a random access preamble (Random access preamble) is determined by the PRACH configuration (prach-Configuration) field. The UE looks up a corresponding configuration table through prach-ConfigurationIndex to obtain a preamble format (preamble format) used by a corresponding cell and a PRACH time-domain resource usable to the cell. That table is shown in Table 3, for example.

For example, it is assumed that frequency range 2 (Frequency range 2, FR2) and unpaired spectrum/SUL are used and the subcarrier spacing of the preamble is 120 kHz. When the indicated PRACH Configuration Index is 74, it can be obtained from Table 3 that under this configuration, the UE can only transmit preambles of format A3 in slots {9, 19, 29, 39} (for FR2, the slots are numbered using subcarrier spacing 60 kHz as a reference) of the system frame that meets $n_{SFN\%}$ 1 = 0 (that is, all system frames). One slot contains two consecutive PRACH slots (the number of PRACH slots within a 60 kHz slot is 2), one PRACH slot contains $N_t^{RA,slot} = 1$ ROs in time domain, each RO occupies $N_{dur}^{RA} = 6$ OFDM symbols, and PRACH transmission starts from the 8th OFDM symbol (a value corresponding to the starting symbol is 7) of each PRACH slot.

### Table 3: Random access configuration for FR2 and unpaired spectrum

| PRACH configuration index | Preamble format | $n_{SFN} \bmod x = y$ | | Subframe number | Starting symbol | Number of PRACH slots within a 60 kHz slot | Number of time-domain PRACHs within a PRACH slot | PRACH duration |
|---|---|---|---|---|---|---|---|---|
| | | $x$ | $y$ | | | | | |
| 74 | A3 | 1 | 0 | 9, 19, 29, 39 | 7 | 2 | 1 | 6 |

V. Serving cell measurement

In a serving cell, the UE measures the synchronization signal reference signal received power (Synchronization Signal Reference Signal Received Power, SS-RSRP) and synchronization signal reference signal received quality (Synchronization Signal Reference Signal Received Quality, SS-RSRQ) of the serving cell, and calculates whether the signal quality of the serving cell meets the criterion at least every M1*N1 DRX cycles, where

if the SMTC period (TSMTC) is > 20 *ms or the DRX period is* $\leq$ 0.64s, M = 2; otherwise, M1 = 1.

The UE needs to use at least two measurement values to filter the SS-RSRP and SS-RSRQ measurement values of the serving cell. An interval between the two measurement values is at least DRX cycle/2.

If the UE evaluates, based on Table 4, that the serving cell does not meet a cell selection criterion S in N_serv consecutive DRX cycles, the UE needs to start measurement on all neighboring cells indicated by the serving cell, regardless of the current measurement rules that limit UE measurement activities.

### Table 4: N_serv

| DRX cycle length (s) | Proportion coefficient (N1) | | Nserv (Number of DRX cycles) |
|---|---|---|---|
| | FR1 | FR2 Note1 | |
| 0.32 | 1 | 8 | M1*N1*4 |
| 0.64 | | 5 | M1*N1*4 |
| 1.28 | | 4 | N1*2 |
| 2.56 | | 3 | N1*2 |
| Note 1: The data applies to UEs supporting power levels 2, 3, and 4. For UEs supporting power level 1, N1 for all DRX cycle lengths is 8. | | | |

VI. Wake up signal (Wake Up Signal, WUS) and DRX

To further improve power-saving performance of UEs, PDCCH-based WUS is introduced. The function of WUS is to notify a UE whether it needs to monitor PDCCH during onDuration (onDuration) of a specific DRX. In the case of no data, the UE does not need to monitor PDCCH during the onDuration, which means that the UE can be in a sleep state throughout the entire DRX long cycle (Long cycle), thereby further saving power.

The WUS signal is a type of DCI, which can be referred to as a DCI with CRC scrambled by power saving RNTI (Power Saving RNTI, PS-RNTI) (DCI with CRC scrambled by PS-RNTI, DCP). The PS-RNTI is an RNTI specifically assigned to the UE by the network for power saving. The DCI scrambled by this RNTI carries a wake-up/sleep indication of the network for the UE. Based on this indication, the UE determines whether to start an onDuration timer and perform PDCCH monitoring in a next DRX cycle.

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

As shown in FIG. 4, an embodiment of this application provides an information configuration method, applied to a terminal, including the following steps.

Step 401. The terminal receives paging downlink control information DCI sent by a network-side device.

Step 402. The terminal obtains system configuration information based on the paging DCI.

The system configuration information includes at least one of the following configuration parameters:

a synchronization signal and physical broadcast channel block SSB period;
a synchronization signal block measurement timing configuration SMTC period;
SSB transmission configuration information;
physical random access channel PRACH configuration index information;
paging discontinuous reception DRX configuration information; and
period configuration information of a common signal.

In this embodiment, the system configuration information is pre-configured by the network-side device or predefined by a protocol. The network-side device sends the system configuration information to the terminal through the paging DCI. The system configuration information may indicate changes in system parameters or configurations. The system configuration information includes, for example, one or more of an SSB period, an SMTC period, SSB transmission configuration information, PRACH configuration index information, paging DRX configuration information, and period configuration information of a common signal. The terminal may be a terminal in an IDLE state. When in the IDLE state, the terminal can obtain system parameter configuration information each time it receives the paging DCI sent by the network-side device, thereby promptly obtaining changes in system parameters or configurations. This enables the terminal to promptly adjust required monitoring parameters, such as promptly adjusting an SSB to be monitored, an SSB monitoring period, and an SMTC monitoring period. The terminal can also promptly obtain the transmitted or non-transmitted SSB based on the SSB transmission configuration information, promptly obtain the latest PRACH configuration based on the PRACH configuration index, and promptly obtain the paging DRX configuration based on the paging DRX configuration information, thereby avoiding access delay and preventing impact on communication performance.

In an optional embodiment, the system configuration information is indicated by at least one of the following:

an indication field or a bit carried by the paging DCI; and
an indication field or a bit carried by the physical downlink shared channel PDSCH scheduled by the paging DCI.

The network-side device may indicate the system configuration information through the indication field or bit of the paging DCI (such as a short message); or may indicate the system configuration information through the indication field or bit carried by the PDSCH scheduled by the paging DCI.

Optionally, the network-side device may send the system configuration information once or multiple times within a period of time, that is, send the system configuration information once or multiple times through the paging DCI within a period of time. The terminal can monitor the system configuration information once or multiple times within this period of time. This period of time and the number of sending times may be protocol-predefined. A time interval for sending the system configuration information may be protocol-predefined.

Optionally, each configuration parameter included in the system configuration information corresponds to N values;

the paging DCI and/or the PDSCH scheduled by the paging DCI indicates a number of the configuration parameter;
or
the paging DCI and/or the PDSCH scheduled by the paging DCI indicates a value of the configuration parameter;
where
N is an integer greater than or equal to 1.

In this embodiment, the system configuration information sent by the network-side device may be present in multiple sets, that is, the system configuration information may include multiple configuration parameters, where each configuration parameter may correspond to one or more values. The number of the configuration parameter may be configured for each value separately, that is, the network-side device may define the number of the configuration parameter corresponding to each value, and when sending the system configuration information to the terminal, it may send the number of the configuration parameter to be used. Alternatively, when sending the system configuration information to the terminal, the network-side device may directly send the value of the configuration parameter to be used. For example, the number of the configuration parameter to be used is indicated through the indication field or bit in the paging DCI. The terminal can look up, based on the number of the configuration parameter, the value of the configuration parameter corresponding to this number, so as to obtain the actual application value. Alternatively, the value of the configuration parameter to be used is directly indicated through the indication field or bit in the paging DCI.

It should be noted that after the network-side device configures one or more configuration parameters for the terminal, it can exchange information with the terminal to send all the configuration parameters to the terminal for storage, for example, synchronizing the configuration parameters to the terminal through RRC or downlink signals. During the communication process, the network-side device can send, to the terminal, the number or value of the configuration parameter that currently needs to be used. For example, for configuration parameter 1, the network-side device pre-configures three values: a, b, and c, respectively corresponding to numbers 00, 01, and 11. The network-side device sends the three values and the corresponding numbers to the terminal for storage. During the communication process, the network-side device can use paging DCI to send the number (such as 11) or value (such as a) of the currently used configuration parameter to the terminal, and the terminal uses the value a corresponding to the configuration parameter 11 to perform the subsequent communication process.

In an optional embodiment, the system configuration information includes at least one of the following configuration parameters:

(1) a synchronization signal and physical broadcast channel block SSB period.

The network-side device can pre-configure multiple SSB periods for the terminal and number the multiple SSB periods. The network-side device can send a number or value of a currently used SSB period to the terminal through the paging DCI. When the SSB period needs to be modified, the network-side device sends a number or value of the modified SSB period to the terminal through the paging DCI.

Taking the network-side device sending the number of the SSB period to the terminal through the paging DCI as an example: The network-side device pre-configures four SSB periods: 20 ms, 40 ms, 80 ms, and 160 ms, respectively corresponding to numbers 00, 01, 10, and 11. The network-side device can synchronize the four SSB periods and numbers to the UE through RRC or downlink signals. To indicate to the terminal that the currently used SSB period is 80 ms, the network-side device only needs to send the number "10" in the paging DCI (or PDSCH), and the UE can know that the current SSB period is 80 ms.

Taking the network-side device sending the value of the SSB period to the terminal through the paging DCI as an example: Only one set of SSB period is configured. When modifying the SSB period, the network-side device directly modifies the period or sends the configuration through the paging DCI.

(2) a synchronization signal block measurement timing configuration SMTC period.

The network-side device can pre-configure multiple SMTC periods for the terminal and number the multiple SMTC periods. The network-side device can send a number or value of a currently used SMTC period to the terminal through the paging DCI. When the SMTC period needs to be modified, the network-side device sends a number or value of the modified SMTC period to the terminal through the paging DCI.

Taking the network-side device sending the number of the SMTC period to the terminal through the paging DCI as an example: The network-side device pre-configures three SMTC periods: 20 ms, 40 ms, and 80 ms, respectively corresponding to numbers 00, 01, and 10. The network-side device can synchronize the three SMTC periods and numbers to the UE through RRC or downlink signals. To indicate to the terminal that the currently used SMTC period is 30 ms, the network-side device only needs to send the number "01" in the paging DCI (or PDSCH), and the UE can know that the current SMTC period is 40 ms.

Taking the network-side device sending the value of the SMTC period to the terminal through the paging DCI as an example: Only one set of SMTC period is configured. When modifying the SMTC period, the network-side device directly modifies the period or sends the configuration through the paging DCI.

(3) SSB transmission configuration information, which can indicate which SSBs are transmitted and which SSBs are not transmitted.

The network-side device can pre-configure multiple SSB transmission configurations for the terminal and number the multiple transmission configurations. The network-side device can send a number or value of a currently used SSB transmission configuration to the terminal through the paging DCI. When the SSB transmission configuration needs to be modified, the network-side device sends a number or value of the modified SSB transmission configuration to the terminal through the paging DCI.

Taking the network-side device sending the number of the currently used SSB transmission configuration to the terminal through the paging DCI as an example: The network-side device pre-configures three SSB transmission configurations: configuration 1, configuration 2, and configuration 3, respectively corresponding to numbers 00, 01, and 10. The network-side device can synchronize the three SSB transmission configurations and numbers to the UE through RRC or downlink signals. To indicate to the terminal that the currently used SSB transmission configuration is configuration 1, the network-side device only needs to send the number "00" in the paging DCI (or PDSCH), and the UE can know that the current SSB transmission configuration is configuration 1.

Taking the network-side device directly sending the SSB transmission configuration to the terminal through the paging DCI as an example: When modifying the SSB transmission configuration, the network-side device directly modifies the SSB transmission configuration or sends the currently used SSB transmission configuration to the terminal through the paging DCI.

(4) physical random access channel PRACH configuration index (PRACH Config. Index) information.

The network-side device can pre-configure multiple PRACH configurations, with each PRACH configuration corresponding to a different index. The network-side device can send an index of a currently used PRACH configuration to the terminal through the paging DCI, and the terminal can obtain the currently used PRACH configuration based on the index, as shown in Table 3.

Optionally, the PRACH configuration corresponding to each index may include one or more sub-configurations with different periods. When one PRACH configuration includes multiple sub-configurations, the network-side device can number the multiple sub-configurations and synchronize them to the terminal. To indicate the currently used PRACH configuration to the terminal, the network-side device can indicate the number of the currently used sub-configuration, or directly indicate the currently used sub-configuration.

(5) paging discontinuous reception DRX configuration information.

Optionally, the paging DRX configuration information includes at least one of the following parameters:

a DRX cycle;
a paging frame PF;
a paging occasion PO;
an offset (offset); and
an initial time of paging.

The network-side device can pre-configure multiple paging DRX configurations for the terminal, meaning that each parameter in the paging DRX configuration can be configured with one or more values, and then directly modify the values of the DRX cycle, PF, PO, offset, initial time, and the like through the paging DCI, or send the number of the modified configuration parameter to the terminal.

(6) period configuration information of a common signal (common signal).

Optionally, the common signal includes at least one of the following:

a cell common PDCCH (cell common PDCCH);
a cell common physical uplink control channel (Physical Uplink Control Channel, PUCCH);
system information block 1 (System Information Block 1, SIB1);
a channel state information reference signal (Channel State Information Reference Signal, CSI-RS); and
a sounding reference signal (Sounding Reference Signal, SRS).

The network-side device can pre-configure multiple period configurations of the common signal for the terminal, meaning that each parameter in the period configuration of the common signal can include one or more values, and then directly modify the period parameter or send the number of the modified period parameter to the terminal through the paging DCI.

In this embodiment, the system configuration information is predefined or pre-configured by the network-side device.

In an optional embodiment, the method further includes:
determining a target configuration based on the system configuration information, where the target configuration includes at least one of the following: first configuration information of the terminal in an idle state; second configuration information of the terminal in an inactive state; and third configuration information of the terminal in a connected state; and performing an operation corresponding to the target configuration at a first time.

In this embodiment, after the system configuration information is detected, the terminal determines subsequent behaviors based on the system configuration information. Specifically, subsequent behaviors in the IDLE state, inactive state, or connected state can be determined based on the system configuration information. The terminal can determine the configurations in different states based on the system configuration information, and perform operations corresponding to the configurations at the first time. The first time is a time at which the target configuration takes effect. Optionally, the first time may be a time point or a time period. For example, after the target configuration is determined, the operation corresponding to the target configuration is performed at a time point corresponding to the first time. Alternatively, the operation corresponding to the target configuration is performed after the first time period following the determination of the target configuration. Alternatively, after the target configuration is determined, the operation corresponding to the target configuration is performed within the first time period.

Optionally, the first configuration information includes at least one of the following:

(1) an index of an SSB that the terminal needs to monitor in the idle state. The UE can re-confirm, based on this configuration, the SSBs that need to be monitored. For example, if the terminal detects that the SSB index sent by the network-side device is 2, the operation corresponding to this configuration information is monitoring the SSB with the index 2 when the terminal is in the idle state.

(2) a period for performing SSB monitoring by the terminal in the idle state. The SSB period is generally specific to the serving cell. For example, if the terminal detects that the SSB period sent by the network-side device is 20 ms, the operation corresponding to this configuration information is performing SSB monitoring with a period of 20 ms when the terminal is in the idle state.

(3) a period for performing SMTC monitoring by the terminal in the idle state. For example, if the terminal detects that the SMTC period sent by the network-side device is 40 ms, the operation corresponding to this configuration information is performing SMTC monitoring with a period of 20 ms when the terminal is in the idle state.

(4) a period for performing paging by the terminal in the inactive state. For example, if the terminal detects that the paging cycle sent by the network-side device is 10 ms, the operation corresponding to this configuration information is performing paging with a period of 10 ms when the terminal is in the idle state.

(5) a location at which the terminal performs paging in the idle state. For example, if the terminal detects that the paging location sent by the network-side device is location b, the operation corresponding to this configuration information is performing paging monitoring at the location b when the terminal is in the idle state.

(6) the number of DRX cycles that need to be continuously measured when an access criterion of a serving cell is met. If a band for the SMTC period is specific to the serving cell, the UE re-confirms, based on the SMTC value, the DRX cycle, and the like, the number of DRX cycles that need to be continuously measured when the access criterion of the serving cell is met. If the band for the SMTC cycle is specific to a neighboring cell, the UE re-confirms the SMTC period for neighboring cell measurement based on the change of this SMTC.

In this embodiment, based on the system configuration information, the terminal can determine parameters such as the index of the SSB that the terminal needs to monitor in the IDLE state, the SSB period, and the SMTC period, and can also determine parameters such as the period and location for performing paging by the terminal in the IDLE state. The terminal can also re-confirm, based on the DRX cycle and the SMTC value, the number of DRX cycles that need to be continuously measured when the access criterion of the serving cell is met.

Optionally, the second configuration information includes at least one of the following:

an index of an SSB that the terminal needs to monitor in the inactive state;
a period for performing SSB monitoring by the terminal in the inactive state;
a period for performing SMTC monitoring by the terminal in the inactive state;
a period for performing paging by the terminal in the inactive state;
a location at which the terminal performs paging in the inactive state; and
the number of DRX cycles that need to be continuously measured when an access criterion of a serving cell is met.

In this embodiment, based on the system configuration information, the terminal can determine parameters such as the index of the SSB that the terminal needs to monitor in the inactive state, the SSB period, and the SMTC period, and can also determine parameters such as the period and location for performing paging by the terminal in the inactive state. The terminal can also re-confirm, based on the DRX cycle and the SMTC value, the number of DRX cycles that need to be continuously measured when the access criterion of the serving cell is met.

Optionally, the third configuration information includes at least one of the following:

a time-domain location at which the terminal is able to send a PRACH resource after entering the connected state;
a time-domain location at which the terminal needs to monitor a common signal after entering the connected state; and
a time-domain location at which the terminal needs to send a common signal after entering the connected state.

In an optional embodiment, the paging DCI includes: M paging DCIs sent by the network-side device within a second time; and

the method further includes: determining the first time based on a monitoring result of system configuration information corresponding to the M paging DCIs; where the second time and M are predefined, and M is an integer greater than or equal to 1.

In this embodiment, the network-side device can send the system configuration information once or multiple times through the paging DCI within the second time. The terminal determines, based on the system configuration information detected once or multiple times within the second time, the first time for performing the operation corresponding to the target configuration. The number of sending times within the second time may be predefined or may be indicated by a separate indication field, and the first time may be 0.

The first time is determined based on the monitoring result of the system configuration information corresponding to the M paging DCIs, which can prevent errors in sending the system configuration information caused by situations such as interference, thereby ensuring the accuracy of the configuration parameters. For example, the M pieces of system configuration information detected by the terminal within the second time all indicate to modify the SSB period to a (or A of the M pieces of system configuration information detected indicate to modify the SSB period to a, where A is less than M, and A may be protocol-predefined and is not limited herein). In this case, the terminal determines to perform SSB monitoring with the SSB period of a at the first time. If only B of the M pieces of configuration information indicating to modify the SSB period to a are detected within the second time, where B is less than M, and B may be protocol-predefined and is not limited herein, the operation of modifying the SSB period is not performed.

It should be noted that in this embodiment, the first time is determined based on the monitoring results of the system configuration information corresponding to the M paging DCIs. The specific determining method may be the method in the above example, or may be another method (for example, the terminal determines the first time based on specific content of system configuration information detected in one monitoring and a predetermined rule). The examples are merely example descriptions and no specific limitations are imposed herein.

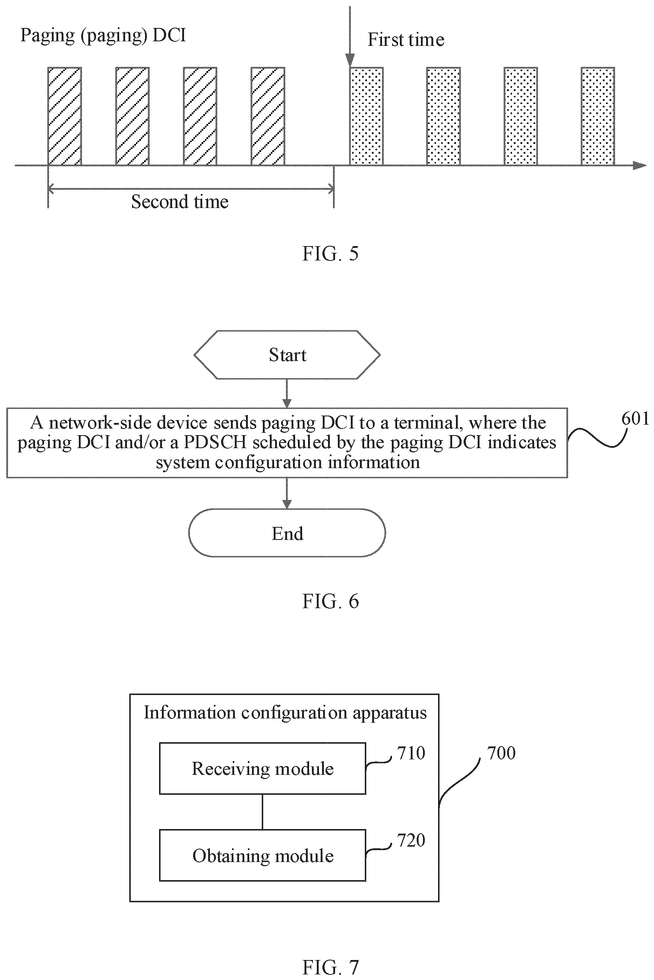

The first time may be a specific time point after M times of monitoring have been performed within the second time and modification information has been determined based on the monitoring results, as shown in FIG. 5.

Optionally, the first time includes at least one of the following:

(1) a predefined time. The predefined time may be a fixed time point, predefined by a protocol, for performing the operation corresponding to the target configuration. For example, the operation may be performed immediately upon detection of the target configuration, or performed at a time point 1 after the target configuration is performed. The predefined time may alternatively be a protocol-predefined time period, and the operation corresponding to the target configuration is performed after this time period. For example, the operation corresponding to the target configuration may be performed after the first time period following the detection of the target configuration, or the operation corresponding to the target configuration may be performed within the first time period after the target configuration is detected.

(2) a paging effective time determined according to a first rule.

Optionally, the first rule includes: the paging effective time is determined based on a paging cycle and a modification period (modification period) of the configuration parameter in the system configuration information; where the modification period is predefined.

In this embodiment, the paging effective time may be an effective time point or an effective time period. For example, if the paging effective time is a moment 1, it means that the operation corresponding to the target configuration is performed at the moment 1. Alternatively, if the paging effective time is after a time period 1, it means that the operation corresponding to the target configuration is performed after the time period 1. Alternatively, if the paging effective time is within a time period 2, it means that the operation corresponding to the target configuration is performed within the time period 2.

The terminal can determine the effective time of the target configuration according to the first rule. That is, the protocol pre-defines the modification period of a specific configuration parameter, and the terminal determines the effective time of the target configuration based on the paging cycle and this predefined modification period. For example, the protocol pre-defines the modification period for SSB/PRACH, and the like. The terminal determines the effective time jointly based on this modification period and the paging cycle.

Optionally, the determining the effective time may be: determining the effective time jointly based on the paging cycle and the value of the modification period polynomial coefficient (modificationperiodcoeff), for example, paging cycle * modificationperiodcoeff = effective time. The terminal performs the operation corresponding to the target configuration at the effective time.

The following describes the information configuration method according to this application through specific embodiments.

For example, the network-side device configures the SSB period/SMTC period/SSB transmission configuration for the terminal.

(1) The network-side device configures system configuration information for the terminal.

Multiple SSB cycles/SMTC cycles/SSB transmission configurations are pre-configured by the network-side device/protocol-predefined and numbered. The currently used number is notified to the UE through paging DCI. The paging DCI may be an existing bit (usable bit) in the short message or a reserved bit.

Optionally, when notifying the terminal of the number of the currently used configuration parameter through the paging DCI, the network-side device may notify the UE through a PDSCH scheduled by the paging DCI.

① Optionally, the network-side device may send the number of the currently used configuration parameter once or multiple times through the paging DCI within the second time. The second time and the number of sending times may be protocol-predefined. The time interval for the sending may also be protocol-predefined.

For example, four SSB cycles/SMTC cycles are pre-configured by the network-side device/protocol-predefined. The number 00 represents 20 ms, 01 represents 40 ms, 10 represents 80 ms, and 11 represents 160 ms. The network-side device notifies, through paging DCI, the UE of the SSB cycle/SMTC cycle to be used, for example, indicates the number "11".

Four SSB transmission configurations are pre-configured by the network-side device/protocol-predefined. The number 00 represents the transmission of SSB 0, SSB 1, SSB 2, SSB 3, SSB 4, SSB 5, SSB 6, and SSB 7; 01 represents the transmission of SSB 0, SSB 1, SSB 2, and SSB 3; 10 represents the transmission of SSB 4, SSB 5, SSB 6, and SSB 7; and 11 represents the transmission of SSB 0, SSB 2, SSB 4, and SSB 6. The network-side device notifies, through paging DCI, the UE of the SSB transmission configuration to be used, for example, indicates the number "01".

② Optionally, the network-side device may directly send the currently used SSB period/SMTC period/SSB configuration to the UE through the paging DCI or the PDSCH scheduled by the paging DCI. The paging DCI may be an existing bit in the short message or a reserved bit.

For example, the network-side device notifies, through paging DCI, the UE of the currently used SSB cycle/SMTC cycle. 00010 represents 20 ms; 00100 represents 40 ms; 01000 represents 80 ms; and 10000 represents 160 ms.

The network-side device notifies the UE of the currently used SSB transmission configuration through the paging DCI. For example, 01011100 represents transmission of SSBs 1, 3, 4, and 5.

(2) The terminal performs subsequent operations based on the system configuration information.

The determining, by the UE upon detection of the paging DCI, a behavior for the first time based on information carried in the paging DCI or the PDSCH may include:

① determining the behavior of the terminal in the IDLE state, such as the index of the SSB that the terminal needs to monitor in the IDLE state, the SSB period, and the SMTC period.

The SSB index and the SSB period are generally specific to a serving cell, and the UE re-confirms, based on the configuration, which SSBs need to be monitored.

If a band for the SMTC period is specific to the serving cell, the UE re-confirms, based on the SMTC value, the DRX cycle, and the like, the number of DRX cycles that need to be continuously measured when the access criterion of the serving cell is met.

If the band for the SMTC cycle is specific to a neighboring cell, the UE re-confirms the SMTC period for neighboring cell measurement based on the change of this SMTC.

② The first time may be:

a: a protocol-predefined time.

This time parameter may be indicated by a separate indication field, and the time may be 0.

Optionally, the first time may be a specific time point after the UE performs one or multiple times of monitoring at the second time and determines modification information based on results of the one or multiple times of monitoring (as shown in FIG. 5). Th second time and the number of monitoring times may be protocol-predefined. A time interval for monitoring may be protocol-predefined. The second time, the number of monitoring times, and the time interval for monitoring may be indicated by separate indication fields.

b: determined according to a first rule.

For example, the SSB modification period is protocol-predefined. The effective time is determined jointly based on the SSB modification period and the paging cycle. Optionally, the determining the effective time jointly based on the paging cycle and the value of modificationperiodcoeff may be: Paging cycle*modificationperiodcoeff.

It should be noted that the SSB cycle/SMTC cycle/SSB transmission configuration may be for a serving cell (serving cell) or a neighboring cell. A periodic change configuration of a periodic common signal (common signal) is similar to the configuration of the SSB period, and details are not described herein.

In this embodiment, in a case that the network-side device in the energy-saving state can dynamically modify the SSB cycle/SMTC cycle/SSB transmission configuration, the network-side device can notify the UE in the idle state as quickly as possible, so that the UE can promptly adjust the SSB (or SMTC) to be monitored and the monitoring period, thereby avoiding access delay of the terminal and preventing impact on communication performance.

In an optional embodiment, the network-side device configuring PRACH configuration for the terminal is used as an example.

(1) The network-side device configures system configuration information for the terminal.

The network-side device pre-configures multiple PRACH Config. Index parameters. The currently used index is notified to the UE through paging DCI. The paging DCI may be an existing bit (usable bit) in the short message or a reserved bit. Alternatively, the currently used index is notified to the UE through the PDSCH scheduled by the paging DCI.

① Optionally, the network-side device may send the currently used index once or multiple times through the paging DCI within the second time. The second time and the number of sending times may be protocol-predefined. The time interval for the sending may also be protocol-predefined.

② Optionally, the network-side device may re-number the multiple PRACH Config. Index parameters and then notify the UE through the paging DCI. For example, the multiple PRACH Config. Index parameters configured by the network-side device are 15, 32, 74, and 81, which are re-numbered by the network-side device to 00, 01, 10, and 11.

③ The network-side device can modify the configuration of PRACH Config. Index, that is, one or more indexes contain multiple sub-configurations with different periods, as shown in Table 5. The base station numbers the sub-configurations, and notifies the UE of the index of the currently used sub-configuration through the paging DCI.

**Table 5**

| PRACH Config. Index | Preamble format | $n_{SFN} \bmod x = y$ | | Subframe number | Starting symbol | Number of PRACH slots within a 60 kHz slot | Number of time-domain PRACHs within a PRACH slot | PRACH duration |
|---|---|---|---|---|---|---|---|---|
| | | $x$ | $y$ | | | | | |
| 74 | A3 | 1 | 0 | 9, 19, 29, 39 | 7 | 2 | 1 | 6 |
| | | 10 | 0 | 9, 19, 29, 39 | 7 | 2 | 1 | 6 |

(2) The terminal performs subsequent operations based on the system configuration information.

Upon detection of the paging DCI, the UE determines, based on information carried in the paging DCI or the PDSCH, a time-domain resource that can be used for transmitting the PRACH at the first time.

The first time may be:

a: a protocol-predefined time.

This time parameter may be indicated by a separate indication field, and the time may be 0.

Optionally, the first time may be a specific time point after the UE performs one or multiple times of monitoring at the second time and determines modification information based on results of the one or multiple times of monitoring. Th second time and the number of monitoring times may be protocol-predefined. A time interval for monitoring may be protocol-predefined. The second time, the number of monitoring times, and the time interval for monitoring may be indicated by separate indication fields.

b: determined according to a first rule.

For example, the SSB modification period is protocol-predefined. The effective time is determined jointly based on the SSB modification period and the paging cycle. Optionally, the determining the effective time jointly based on the paging cycle and the value of modificationperiodcoeff may be: Paging cycle*modificationperiodcoeff.

In this embodiment, if the network-side device dynamically adjusts the system configuration, it can promptly notify the UE in the IDLE state through the paging DCI. This enables the UE to promptly adjust parameters, thereby reducing delay.

In an optional embodiment, the network-side device configuring paging DRX configuration for the terminal is used as an example.

(1) The network-side device configures system configuration information for the terminal.

The network-side device can pre-configure multiple paging DRX configurations. The paging DRX configuration includes at least one of the following: the DRX cycle, PF, PO, offset, initial time, and the like. The network-side device notifies the UE of the number of the currently used configuration through paging DCI. The paging DCI may be an existing bit (usable bit) in the short message or a reserved bit. Alternatively, the number of the currently used configuration is notified to the UE through the PDSCH scheduled by the paging DCI.

Optionally, the network-side device may also configure one paging DRX configuration and directly modify values such as the DRX cycle, PF, PO, offset, and initial time through the paging DCI.

(2) The terminal performs subsequent operations based on the system configuration information.

Upon detection of the paging DCI, the UE determines a behavior for the first time based on information carried in the paging DCI or the PDSCH. The behavior may be, for example, determining parameters such as the paging cycle and position for the UE in the RRC_IDLE state. Optionally, the UE may also re-confirm, based on the DRX cycle and the SMTC value, the number of DRX cycles that need to be continuously measured when the access criterion of the serving cell is met.

The first time may be:

a: a protocol-predefined time.

This time parameter may be indicated by a separate indication field, and the time may be 0.

Optionally, the first time may be a specific time point after one or multiple times of monitoring have been performed at the second time and modification information has been determined based on results of the one or multiple times of monitoring. Th second time and the number of monitoring times may be protocol-predefined. A time interval for monitoring may be protocol-predefined. The second time, the number of monitoring times, and the time interval for monitoring may be indicated by separate indication fields.

b: determined according to a first rule.

For example, the SSB modification period is protocol-predefined. The effective time is determined jointly based on the SSB modification period and the paging cycle. Optionally, the determining the effective time jointly based on the paging cycle and the value of modificationperiodcoeff may be: Paging cycle*modificationperiodcoeff.

In this embodiment, the UE in the RRC_IDLE or RRC_INACTIVE state can use DRX to receive paging messages to reduce power consumption. When dynamically modifying parameters such as the paging DRX cycle, the network-side device can promptly notify the UE in the IDLE state through the paging DCI. This enables the UE to promptly adjust parameters, thereby reducing delay.

In the embodiments of this application, the terminal can obtain system parameter configuration information each time it receives the paging DCI sent by the network-side device, thereby promptly obtaining changes in system parameters or configurations. This enables the terminal to promptly adjust the required monitoring parameters and promptly adjust its own behavior, thereby avoiding access delay and preventing impact on communication performance.

As shown in FIG. 6, an embodiment of this application further provides an information configuration method, applied to a network-side device, including the following steps.

Step 601. The network-side device sends paging DCI to a terminal, where the paging DCI and/or a PDSCH scheduled by the paging DCI indicates system configuration information.

The system configuration information includes at least one of the following configuration parameters:

an SSB period;
an SMTC period;
SSB transmission configuration information;
PRACH configuration index information;
paging DRX configuration information; and
period configuration information of a common signal.

In this embodiment, the system configuration information is pre-configured by the network-side device or predefined by a protocol. The network-side device sends the system configuration information to the terminal through the paging DCI and/or the PDSCH scheduled by the paging DCI. The system configuration information may indicate changes in system parameters or configurations. The terminal may be a terminal in the IDLE state. When in the IDLE state, the terminal can obtain system parameter configuration information each time it receives the paging DCI sent by the network-side device, thereby promptly obtaining changes in system parameters or configurations. This enables the terminal to promptly adjust the required monitoring parameters, thereby avoiding access delay and preventing impact on communication performance.

In an optional embodiment, the system configuration information is indicated by at least one of the following:

an indication field or a bit carried by the paging DCI; and
an indication field or a bit carried by the physical downlink shared channel PDSCH scheduled by the paging DCI.

The network-side device may indicate the system configuration information through the indication field or bit of the paging DCI (such as a short message); or may indicate the system configuration information through the indication field or bit carried by the PDSCH scheduled by the paging DCI.

Optionally, each configuration parameter included in the system configuration information corresponds to N values;

the paging DCI and/or the PDSCH scheduled by the paging DCI indicates a number of the configuration parameter; or
the paging DCI and/or the PDSCH scheduled by the paging DCI indicates a value of the configuration parameter; where
N is an integer greater than or equal to 1.

In this embodiment, the network-side device can pre-configure multiple sets of system configuration information for the terminal, that is, the system configuration information can include multiple configuration parameters, and each configuration parameter can correspond to one or more values. The network-side device may define numbers for the configuration parameters corresponding to the values. When sending the system configuration information to the terminal, the network-side device may send the number of the configuration parameter to be used. Alternatively, when sending the system configuration information to the terminal, the network-side device may directly send the value of the configuration parameter to be used. For example, the number of the configuration parameter to be used is indicated through the indication field or bit in the paging DCI. The terminal can look up, based on the number of the configuration parameter, the value of the configuration parameter corresponding to this number, so as to obtain the actual application value. Alternatively, the value of the configuration parameter to be used is directly indicated through the indication field or bit in the paging DCI.

It should be noted that after the network-side device configures one or more configuration parameters for the terminal, it can exchange information with the terminal to send all the configuration parameters to the terminal for storage. During the communication process, the network-side device can send, to the terminal, the number or value of the configuration parameter that currently needs to be used.

Optionally, the sending paging DCI to a terminal includes: sending M paging DCIs to the terminal within a second time; where the second time and M are predefined, and M is an integer greater than or equal to 1.

In this embodiment, the network-side device can send the system configuration information once or multiple times within a period of time (that is, the second time), that is, send the system configuration information once or multiple times through the paging DCI within a period of time. The terminal can monitor the system configuration information once or multiple times within this period of time. This period of time may be protocol-predefined. A time interval for sending the system configuration information may be protocol-predefined.

In an optional embodiment, the system configuration information includes at least one of the following configuration parameters:

(1) an SSB period
The network-side device can pre-configure multiple SSB periods for the terminal and number the multiple SSB periods. The network-side device can send a number or value of a currently used SSB period to the terminal through the paging DCI. When the SSB period needs to be modified, the network-side device sends a number or value of the modified SSB period to the terminal through the paging DCI.

(2) an SMTC period
The network-side device can pre-configure multiple SMTC periods for the terminal and number the multiple SMTC periods. The network-side device can send a number or value of a currently used SMTC period to the terminal through the paging DCI. When the SMTC period needs to be modified, the network-side device sends a number or value of the modified SMTC period to the terminal through the paging DCI.

(3) SSB transmission configuration information, which can indicate which SSBs are transmitted and which SSBs are not transmitted.
The network-side device can pre-configure multiple SSB transmission configurations for the terminal and number the multiple transmission configurations. The network-side device can send a number or value of a currently used SSB transmission configuration to the terminal through the paging DCI. When the SSB transmission configuration needs to be modified, the network-side device sends a number or value of the modified SSB transmission configuration to the terminal through the paging DCI.

(4) PRACH configuration index (PRACH Config. Index) information

The network-side device can pre-configure multiple PRACH configurations, with each PRACH configuration corresponding to a different index. The network-side device can send an index of a currently used PRACH configuration to the terminal through the paging DCI, and the terminal can obtain the currently used PRACH configuration based on the index.

Optionally, the PRACH configuration corresponding to each index may include one or more sub-configurations with different periods. When one PRACH configuration includes multiple sub-configurations, the network-side device can number the multiple sub-configurations and synchronize them to the terminal. To indicate the currently used PRACH configuration to the terminal, the network-side device can indicate the number of the currently used sub-configuration, or directly indicate the currently used sub-configuration.

(5) paging DRX configuration information

Optionally, the paging DRX configuration information includes at least one of the following parameters:

a DRX cycle;
a PF;
a PO;
an offset (offset); and
an initial time of paging.

The network-side device can pre-configure multiple paging DRX configurations for the terminal, meaning that each parameter in the paging DRX configuration can be configured with one or more values, and then directly modify the values of the DRX cycle, PF, PO, offset, initial time, and the like through the paging DCI, or send the number of the modified configuration parameter to the terminal.

(6) period configuration information of a common signal (common signal)

Optionally, the common signal includes at least one of the following:

a cell common PDCCH (cell common PDCCH);
a cell common PUCCH (cell common PUCCH);
a SIB 1;
a CSI-RS; and

an SRS.

The network-side device can pre-configure multiple period configurations of the common signal for the terminal, meaning that each parameter in the period configuration of the common signal can include one or more values, and then directly modify the period parameter or send the number of the modified period parameter to the terminal through the paging DCI.

In this embodiment, the system configuration information is predefined or pre-configured by the network-side device.

In the embodiments of this application, the network-side device sends the system configuration information to the terminal through the paging DCI and/or the PDSCH scheduled by the paging DCI, so that the terminal can promptly obtain the system parameters configured or modified by the network-side device. This enables the terminal to promptly adjust the required monitoring parameters and promptly adjust its own behavior, thereby avoiding access delay and preventing impact on communication performance.

The information configuration method provided in the embodiments of this application can be executed by an information configuration apparatus. In the embodiments of this application, the information configuration apparatus performing the information configuration method is used as an example to describe an information configuration apparatus provided in an embodiment of this application.

As shown in FIG. 7, an embodiment of this application provides an information configuration apparatus 700, applied to a terminal, including:

a receiving module 710, configured to receive paging DCI sent by a network-side device; and
an obtaining module 720, configured to obtain system configuration information based on the paging DCI.

The system configuration information includes at least one of the following configuration parameters:

an SSB period;
an SMTC period;
SSB transmission configuration information;
PRACH configuration index information;
paging DRX configuration information; and
period configuration information of a common signal.

Optionally, the system configuration information is indicated by at least one of the following:

an indication field or a bit carried by the paging DCI; and
an indication field or a bit carried by the PDSCH scheduled by the paging DCI.

Optionally, each configuration parameter included in the system configuration information corresponds to N values;

the paging DCI and/or the PDSCH scheduled by the paging DCI indicates a number of the configuration parameter; or
the paging DCI and/or the PDSCH scheduled by the paging DCI indicates a value of the configuration parameter; where
N is an integer greater than or equal to 1.

Optionally, the paging DRX configuration information includes at least one of the following parameters:

a DRX cycle;
a PF;
a PO;
an offset; and
an initial time of paging.

Optionally, the common signal includes at least one of the following:

a cell common PDCCH;
a cell common PUCCH;

a SIB 1;
a CSI-RS; and
an SRS.

Optionally, the system configuration information is predefined or pre-configured by the network-side device.

Optionally, the apparatus further includes:

a first determining module, configured to determine a target configuration based on the system configuration information, where the target configuration includes at least one of the following: first configuration information of the terminal in an idle state; second configuration information of the terminal in an inactive state; and third configuration information of the terminal in a connected state; and
a processing module, configured to perform an operation corresponding to the target configuration at a first time.

Optionally, the first configuration information includes at least one of the following:

an index of an SSB that the terminal needs to monitor in the idle state;
a period for performing SSB monitoring by the terminal in the idle state;
a period for performing SMTC monitoring by the terminal in the idle state;
a period for performing paging by the terminal in the idle state;
a location at which the terminal performs paging in the idle state; and
the number of DRX cycles that need to be continuously measured when an access criterion of a serving cell is met.

Optionally, the second configuration information includes at least one of the following:

an index of an SSB that the terminal needs to monitor in the inactive state;
a period for performing SSB monitoring by the terminal in the inactive state;
a period for performing SMTC monitoring by the terminal in the inactive state;
a period for performing paging by the terminal in the inactive state;
a location at which the terminal performs paging in the inactive state; and
the number of DRX cycles that need to be continuously measured when an access criterion of a serving cell is met.

Optionally, the third configuration information includes at least one of the following:

a time-domain location at which the terminal is able to send a PRACH resource after entering the connected state;
a time-domain location at which the terminal needs to monitor a common signal after entering the connected state; and
a time-domain location at which the terminal needs to send a common signal after entering the connected state.

Optionally, the paging DCI includes: M paging DCIs sent by the network-side device within a second time; and the apparatus further includes:

a second determining module, configured to determine the first time based on a monitoring result of system configuration information corresponding to the M paging DCIs; where
the second time and M are predefined, and M is an integer greater than or equal to 1.

Optionally, the first time includes at least one of the following:

a predefined time; and
a paging effective time determined according to a first rule.

Optionally, the first rule includes:

the paging effective time is determined based on a paging cycle and a modification period of a configuration parameter in the system configuration information; where
the modification period is predefined.

In the embodiments of this application, the terminal can obtain system parameter configuration information each time it receives the paging DCI sent by the network-side device, thereby promptly obtaining changes in system parameters or configurations. This enables the terminal to promptly adjust the required monitoring parameters and promptly adjust its own behavior, thereby avoiding access delay and preventing impact on communication performance.

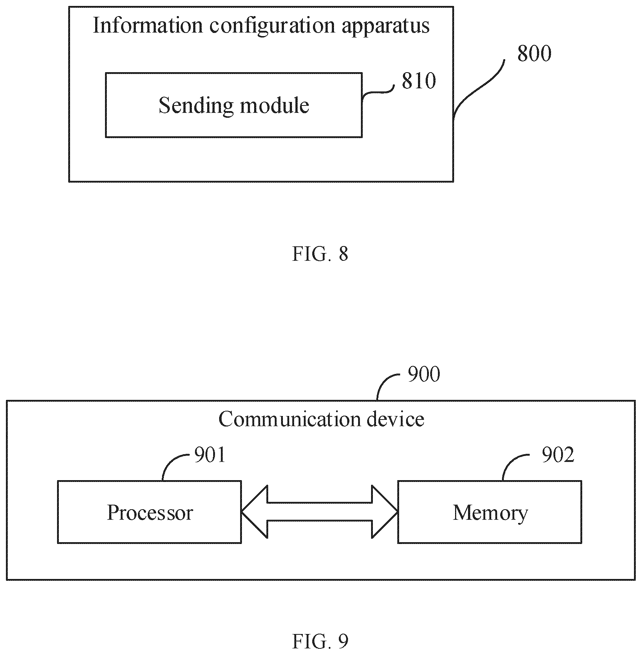

As shown in FIG. 8, an embodiment of this application further provides an information configuration apparatus 800, applied to a network-side device, including:

a sending module 810, configured to send paging DCI to a terminal, where the paging DCI and/or a PDSCH scheduled by the paging DCI indicates system configuration information.

The system configuration information includes at least one of the following configuration parameters:

an SSB period;
an SMTC period;
SSB transmission configuration information;
PRACH configuration index information;
paging DRX configuration information; and
period configuration information of a common signal.

Optionally, the system configuration information is indicated by at least one of the following:

an indication field or a bit carried by the paging DCI; and
an indication field or a bit carried by the PDSCH scheduled by the paging DCI.

Optionally, each configuration parameter included in the system configuration information corresponds to N values;

the paging DCI and/or the PDSCH scheduled by the paging DCI indicates a number of the configuration parameter; or
the paging DCI and/or the PDSCH scheduled by the paging DCI indicates a value of the configuration parameter; where
N is an integer greater than or equal to 1.

Optionally, the sending module is specifically configured to:

send M paging DCIs to the terminal within a second time; where
the second time and M are predefined, and M is an integer greater than or equal to 1.

Optionally, the paging DRX configuration information includes at least one of the following parameters:

a DRX cycle;
a PF;
a PO;
an offset; and
an initial time of paging.

Optionally, the common signal includes at least one of the following:

a cell common PDCCH;
a cell common PUCCH;
a SIB 1;
a CSI-RS; and
an SRS.

In the embodiments of this application, the network-side device sends the system configuration information to the terminal through the paging DCI and/or the PDSCH scheduled by the paging DCI, so that the terminal can promptly obtain the system parameters configured or modified by the network-side device. This enables the terminal to promptly adjust the required monitoring parameters and promptly adjust its own behavior, thereby avoiding access delay and preventing impact on communication performance.

The information configuration apparatus in the embodiments of this application may be an electronic device, such as an electronic device having an operating system, or a component in an electronic device, such as an integrated circuit or a chip. The electronic device may be a terminal or another device different from the terminal. For example, the terminal may include but is not limited to the types of the terminal 11 listed above, and the another device may be a server, a network attached storage (Network Attached Storage, NAS), or the like, which are not specifically limited in the embodiments of this application.

The information configuration apparatus provided in this embodiment of this application is capable of implementing the processes implemented in the method embodiments of FIG. 4 to FIG. 6, with the same technical effects achieved. To avoid repetition, details are not described herein again.

Optionally, as shown in FIG. 9, an embodiment of this application further provides a communication device 900 including a processor 901 and a memory 902. The memory 902 stores a program or instructions capable of running on the processor 901. For example, when the communication device 900 is a terminal, the program or instructions are executed by the processor 901 to implement the steps of the information configuration method embodiment applied to the terminal, with the same technical effects achieved. When the communication device 900 is a network-side device, the program or instructions are executed by the processor 901 to implement the steps of the information configuration method embodiment applied to the network-side device, with the same technical effects achieved. To avoid repetition, details are not described herein again.

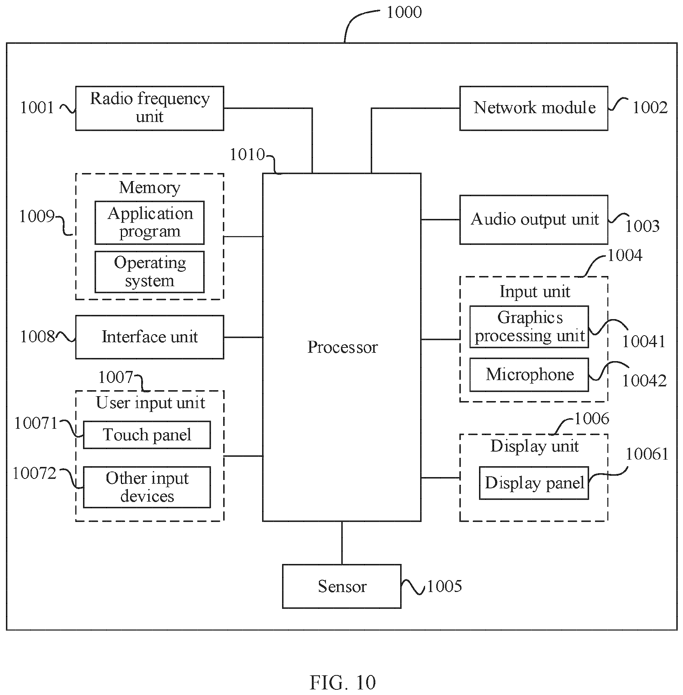

An embodiment of this application further provides a terminal including a processor and a communication interface. The communication interface is configured to receive paging downlink control information DCI sent by a network-side device; and the processor is configured to obtain system configuration information based on the paging DCI. Optionally, the system configuration information includes at least one of the following configuration parameters: an SSB period; an SMTC period; SSB transmission configuration information; PRACH configuration index information; paging DRX configuration information; and period configuration information of a common signal. This terminal embodiment corresponds to the above method embodiments on the terminal side. The processes and implementations of the above method embodiments can be applied to this terminal embodiment, with the same technical effects achieved. Specifically, FIG. 10 is a schematic diagram of a hardware structure of a terminal implementing an embodiment of this application.

The terminal 1000 includes but is not limited to at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system, so as to implement functions such as charging management, discharging management, and power consumption management through the power management system. The structure of the terminal shown in FIG. 10 does not constitute any limitation on the terminal. The terminal may include more or fewer components than shown in the figure, or a combination of some components, or the components disposed differently. Details are not described herein.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In the embodiment of this application, after receiving downlink data from the network-side device, the radio frequency unit 1001 can transmit the downlink data to the processor 1010 for processing. In addition, the radio frequency unit 1001 can send uplink data to the network-side device. Typically, the radio frequency unit 1001 includes but is not limited to an antenna, an amplifier, a transceiver, a coupler, a low noise amplifier, and a duplexer.

The memory 1009 may be configured to store software programs or instructions and various data. The memory 1009 may mainly include a first storage area for storing programs or instructions and a second storage area for storing data. The first storage area may store an operating system, an application program or instructions required by at least one function (for example, a sound play function or an image play function), and the like. Additionally, the memory 1009 may include a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct Rambus dynamic random access memory (Direct Rambus RAM, DRRAM). The memory 1009 in the embodiment of this application includes but is not limited to these and any other suitable types of memory.

The processor 1010 may include one or more processing units; optionally, the processor 1010 integrates an application processor and a modem processor, where the application processor mainly handles operations involving the operating system, user interface, and application programs, and the modem processor mainly handles wireless communication signals, such as a baseband processor. It can be understood that the modem processor may alternatively be not integrated in the processor 1010.

The radio frequency unit 1001 is configured to receive paging DCI sent by a network-side device.

The processor 1010 is configured to obtain system configuration information based on the paging DCI.

Optionally, the system configuration information includes at least one of the following configuration parameters:

an SSB period;
an SMTC period;
SSB transmission configuration information;
PRACH configuration index information;
paging DRX configuration information; and
period configuration information of a common signal.

Optionally, the system configuration information is indicated by at least one of the following:

an indication field or a bit carried by the paging DCI; and
an indication field or a bit carried by the physical downlink shared channel PDSCH scheduled by the paging DCI.

Optionally, each configuration parameter included in the system configuration information corresponds to N values;

the paging DCI and/or the PDSCH scheduled by the paging DCI indicates a number of the configuration parameter; or
the paging DCI and/or the PDSCH scheduled by the paging DCI indicates a value of the configuration parameter; where
N is an integer greater than or equal to 1.

Optionally, the paging DRX configuration information includes at least one of the following parameters:

a DRX cycle;
a PF;
a PO;
an offset; and
an initial time of paging.

Optionally, the common signal includes at least one of the following:

a cell common PDCCH;
a cell common PUCCH;
a SIB 1;
a CSI-RS; and
an SRS.

Optionally, the system configuration information is predefined or pre-configured by the network-side device.

Optionally, the processor 1010 is further configured to: determine a target configuration based on the system configuration information, where the target configuration includes at least one of the following: first configuration information of the terminal in an idle state; second configuration information of the terminal in an inactive state; and third configuration information of the terminal in a connected state; and
perform an operation corresponding to the target configuration at a first time.

Optionally, the first configuration information includes at least one of the following:

an index of an SSB that the terminal needs to monitor in the idle state;
a period for performing SSB monitoring by the terminal in the idle state;

a period for performing SMTC monitoring by the terminal in the idle state;
a period for performing paging by the terminal in the idle state;
a location at which the terminal performs paging in the idle state; and
the number of DRX cycles that need to be continuously measured when an access criterion of a serving cell is met.

Optionally, the second configuration information includes at least one of the following:

an index of an SSB that the terminal needs to monitor in the inactive state;
a period for performing SSB monitoring by the terminal in the inactive state;
a period for performing SMTC monitoring by the terminal in the inactive state;
a period for performing paging by the terminal in the inactive state;
a location at which the terminal performs paging in the inactive state; and
the number of DRX cycles that need to be continuously measured when an access criterion of a serving cell is met.

Optionally, the third configuration information includes at least one of the following:

a time-domain location at which the terminal is able to send a PRACH resource after entering the connected state;
a time-domain location at which the terminal needs to monitor a common signal after entering the connected state; and
a time-domain location at which the terminal needs to send a common signal after entering the connected state.

Optionally, the paging DCI includes: M paging DCIs sent by the network-side device within a second time; and

and the processor 1010 is further configured to: determine the first time based on a monitoring result of system configuration information corresponding to the M paging DCIs; where
the second time and M are predefined, and M is an integer greater than or equal to 1.

Optionally, the first time includes at least one of the following:

a predefined time; and
a paging effective time determined according to a first rule.

Optionally, the first rule includes:

the paging effective time is determined based on a paging cycle and a modification period of a configuration parameter in the system configuration information; where
the modification period is predefined.

In the embodiments of this application, the terminal can obtain system parameter configuration information each time it receives the paging DCI sent by the network-side device, thereby promptly obtaining changes in system parameters or configurations. This enables the terminal to promptly adjust the required monitoring parameters and promptly adjust its own behavior, thereby avoiding access delay and preventing impact on communication performance.

An embodiment of this application further provides a network-side device, including a processor and a communication interface. The communication interface is configured to send paging DCI to a terminal, where the paging DCI and/or a PDSCH scheduled by the paging DCI indicates system configuration information; where the system configuration information includes at least one of the following configuration parameters: an SSB period; an SMTC period; SSB transmission configuration information; PRACH configuration index information; paging DRX configuration information; and period configuration information of a common signal. This network-side device embodiment corresponds to the above method embodiment on the network-side device. The processes and implementations of the above method embodiment can be applied to this network-side device embodiment, with the same technical effects achieved.

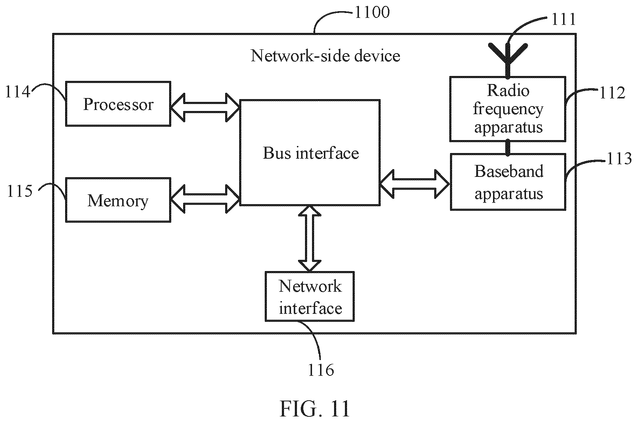

Specifically, an embodiment of this application further provides a network-side device. As shown in FIG. 11, the network-side device 1100 includes: an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information via the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information via the antenna 111.

The method performed by the network-side device in the above embodiments may be implemented in the baseband apparatus 113, and the baseband apparatus 113 includes a baseband processor.

The baseband apparatus 113 may include, for example, at least one baseband processing unit, where a plurality of chips are disposed on the baseband processing unit. As shown in FIG. 11, one of the chips is, for example, the baseband processor, and connected to the memory 115 via a bus interface, to invoke the program in the memory 115 to perform the operations of the network-side device shown in the foregoing method embodiments.

The network-side device may further include a network interface 116. The interface is, for example, a common public radio interface (common public radio interface, CPRI).

Specifically, the network-side device 1100 in this embodiment of this application further includes: instructions or a program stored in the memory 115 and capable of running on the processor 114. The processor 114 invokes the instructions or program in the memory 115 to execute the method executed by the modules shown in FIG. 8, with the same technical effects achieved. To avoid repetition, details are not described herein again.

An embodiment of this application further provides a readable storage medium. The readable storage medium stores a program or instructions. When the program or instructions are executed by a processor, the processes of the foregoing information configuration method embodiment are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disc.

An embodiment of this application further provides a chip. The chip includes a processor and a communication interface. The communication interface is coupled to the processor, and the processor is configured to run a program or instructions to implement the foregoing information configuration method embodiments, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing information configuration method embodiments, with the same technical effects achieved. To avoid repetition, details are not described herein again.

An embodiment of this application further provides an information configuration system including: a terminal and a network-side device. The terminal may be configured to perform the steps of the foregoing information configuration method applied to the terminal, and the network-side device may be configured to perform the steps of the foregoing information configuration method applied to the network-side device.

It should be noted that in this specification, the terms "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. An information configuration method, comprising:

   receiving, by a terminal, paging downlink control information DCI sent by a network-side device; and
   obtaining, by the terminal, system configuration information based on the paging DCI; wherein
   the system configuration information comprises at least one of the following configuration parameters:

   a synchronization signal and physical broadcast channel block SSB period;
   a synchronization signal block measurement timing configuration SMTC period;
   SSB transmission configuration information;
   physical random access channel PRACH configuration index information;
   paging discontinuous reception DRX configuration information; and
   period configuration information of a common signal.

2. The method according to claim 1, wherein the system configuration information is indicated by at least one of the following:

   an indication field or a bit carried by the paging DCI; and
   an indication field or a bit carried by a physical downlink shared channel PDSCH scheduled by the paging DCI.

3. The method according to claim 2, wherein each configuration parameter comprised in the system configuration information corresponds to N values; and

   the paging DCI and/or the PDSCH scheduled by the paging DCI indicates a number of the configuration parameter;
   or
   the paging DCI and/or the PDSCH scheduled by the paging DCI indicates a value of the configuration parameter; wherein
   N is an integer greater than or equal to 1.

4. The method according to claim 1, wherein the paging DRX configuration information comprises at least one of the following parameters:

   a DRX cycle;
   a paging frame PF;
   a paging occasion PO;
   an offset; and
   an initial time of paging.

5. The method according to claim 1, wherein the common signal comprises at least one of the following:

   a cell common physical downlink control channel PDCCH;
   a cell common physical uplink control channel PUCCH;
   a system information block SIB 1;
   a channel state information reference signal CSI-RS; and
   a sounding reference signal SRS.

6. The method according to claim 1, wherein the system configuration information is predefined or pre-configured by the network-side device.

7. The method according to claim 1, wherein the method further comprises:

   determining a target configuration based on the system configuration information, wherein the target configuration comprises at least one of the following: first configuration information of the terminal in an idle state; second configuration information of the terminal in an inactive state; and third configuration information of the terminal in a connected state; and
   performing an operation corresponding to the target configuration at a first time.

8. The method according to claim 7, wherein the first configuration information comprises at least one of the following:

   an index of an SSB that the terminal needs to monitor in the idle state;
   a period for performing SSB monitoring by the terminal in the idle state;
   a period for performing SMTC monitoring by the terminal in the idle state;
   a period for performing paging by the terminal in the idle state;
   a location at which the terminal performs paging in the idle state; and
   the number of DRX cycles that need to be continuously measured when an access criterion of a serving cell is met.

9. The method according to claim 7, wherein the second configuration information comprises at least one of the following:

   an index of an SSB that the terminal needs to monitor in the inactive state;
   a period for performing SSB monitoring by the terminal in the inactive state;
   a period for performing SMTC monitoring by the terminal in the inactive state;
   a period for performing paging by the terminal in the inactive state;
   a location at which the terminal performs paging in the inactive state; and
   the number of DRX cycles that need to be continuously measured when an access criterion of a serving cell is met.

10. The method according to claim 7, wherein the third configuration information comprises at least one of the following:

    a time-domain location at which the terminal is able to send a PRACH resource after entering the connected state;
    a time-domain location at which the terminal needs to monitor a common signal after entering the connected state; and
    a time-domain location at which the terminal needs to send a common signal after entering the connected state.

11. The method according to claim 7, wherein the paging DCI comprises: M paging DCIs sent by the network-side device within a second time; and
    the method further comprises:

    determining the first time based on a monitoring result of system configuration information corresponding to the M paging DCIs; wherein
    the second time and M are predefined, and M is an integer greater than or equal to 1.

12. The method according to claim 7 or 11, wherein the first time comprises at least one of the following:

    a predefined time; and
    a paging effective time determined according to a first rule.

13. The method according to claim 12, wherein the first rule comprises:

    the paging effective time is determined based on a paging cycle and a modification period of a configuration parameter in the system configuration information; wherein
    the modification period is predefined.

14. An information configuration method, comprising:

    sending, by a network-side device, paging DCI to a terminal, wherein the paging DCI and/or a PDSCH scheduled by the paging DCI indicates system configuration information; wherein
    the system configuration information comprises at least one of the following configuration parameters:

    an SSB period;
    an SMTC period;
    SSB transmission configuration information;
    PRACH configuration index information;
    paging DRX configuration information; and
    period configuration information of a common signal.

15. The method according to claim 14, wherein the system configuration information is indicated by at least one of the following:

> an indication field or a bit carried by the paging DCI; and
> an indication field or a bit carried by the PDSCH scheduled by the paging DCI.

16. The method according to claim 15, wherein each configuration parameter comprised in the system configuration information corresponds to N values; and

> the paging DCI and/or the PDSCH scheduled by the paging DCI indicates a number of the configuration parameter;
> or
> the paging DCI and/or the PDSCH scheduled by the paging DCI indicates a value of the configuration parameter; wherein
> N is an integer greater than or equal to 1.

17. The method according to claim 14, wherein the sending paging DCI to a terminal comprises:

> sending M paging DCIs to the terminal within a second time; wherein
> the second time and M are predefined, and M is an integer greater than or equal to 1.

18. The method according to claim 14, wherein the paging DRX configuration information comprises at least one of the following parameters:

> a DRX cycle;
> a PF;
> a PO;
> an offset; and
> an initial time of paging.

19. The method according to claim 14, wherein the common signal comprises at least one of the following:

> a cell common PDCCH;
> a cell common PUCCH;
> a SIB1;
> a CSI-RS; and
> an SRS.

20. An information configuration apparatus, comprising:

> a receiving module, configured to receive paging DCI sent by a network-side device; and
> an obtaining module, configured to obtain system configuration information based on the paging DCI; wherein the system configuration information comprises at least one of the following configuration parameters:
>
>> an SSB period;
>> an SMTC period;
>> SSB transmission configuration information;
>> PRACH configuration index information;
>> paging DRX configuration information; and
>> period configuration information of a common signal.

21. The apparatus according to claim 20, wherein the system configuration information is indicated by at least one of the following:

> an indication field or a bit carried by the paging DCI; and
> an indication field or a bit carried by a PDSCH scheduled by the paging DCI.

22. The apparatus according to claim 21, wherein each configuration parameter comprised in the system configuration information corresponds to N values; and

the paging DCI and/or the PDSCH scheduled by the paging DCI indicates a number of the configuration parameter;
or
the paging DCI and/or the PDSCH scheduled by the paging DCI indicates a value of the configuration parameter; wherein
N is an integer greater than or equal to 1.

23. The apparatus according to claim 20, wherein the paging DRX configuration information comprises at least one of the following parameters:

a DRX cycle;
a PF;
a PO;
an offset; and
an initial time of paging.

24. The apparatus according to claim 20, wherein the common signal comprises at least one of the following:

a cell common PDCCH;
a cell common PUCCH;
a SIB 1;
a CSI-RS; and
an SRS.

25. The apparatus according to claim 20, wherein the system configuration information is predefined or pre-configured by the network-side device.

26. The apparatus according to claim 20, wherein the apparatus further comprises:

a first determining module, configured to determine a target configuration based on the system configuration information, wherein the target configuration comprises at least one of the following: first configuration information of the terminal in an idle state; second configuration information of the terminal in an inactive state; and third configuration information of the terminal in a connected state; and
a processing module, configured to perform an operation corresponding to the target configuration at a first time.

27. The apparatus according to claim 26, wherein the first configuration information comprises at least one of the following:

an index of an SSB that the terminal needs to monitor in the idle state;
a period for performing SSB monitoring by the terminal in the idle state;
a period for performing SMTC monitoring by the terminal in the idle state;
a period for performing paging by the terminal in the idle state;
a location at which the terminal performs paging in the idle state; and
the number of DRX cycles that need to be continuously measured when an access criterion of a serving cell is met.

28. The apparatus according to claim 26, wherein the second configuration information comprises at least one of the following:

an index of an SSB that the terminal needs to monitor in the inactive state;
a period for performing SSB monitoring by the terminal in the inactive state;
a period for performing SMTC monitoring by the terminal in the inactive state;
a period for performing paging by the terminal in the inactive state;
a location at which the terminal performs paging in the inactive state; and
the number of DRX cycles that need to be continuously measured when an access criterion of a serving cell is met.

29. The apparatus according to claim 26, wherein the third configuration information comprises at least one of the following:

a time-domain location at which the terminal is able to send a PRACH resource after entering the connected state;
a time-domain location at which the terminal needs to monitor a common signal after entering the connected state; and
a time-domain location at which the terminal needs to send a common signal after entering the connected state.

30. The apparatus according to claim 26, wherein the paging DCI comprises: M paging DCIs sent by the network-side device within a second time; and
the apparatus further comprises:

a second determining module, configured to determine the first time based on a monitoring result of system configuration information corresponding to the M paging DCIs; wherein
the second time and M are predefined, and M is an integer greater than or equal to 1.

31. The apparatus according to claim 26 or 30, wherein the first time comprises at least one of the following:

a predefined time; and
a paging effective time determined according to a first rule.

32. The apparatus according to claim 31, wherein the first rule comprises:

the paging effective time is determined based on a paging cycle and a modification period of a configuration parameter in the system configuration information; wherein
the modification period is predefined.

33. An information configuration apparatus, comprising:

a sending module, configured to send paging DCI to a terminal, wherein the paging DCI and/or a PDSCH scheduled by the paging DCI indicates system configuration information; wherein
the system configuration information comprises at least one of the following configuration parameters:

an SSB period;
an SMTC period;
SSB transmission configuration information;
PRACH configuration index information;
paging DRX configuration information; and
period configuration information of a common signal.

34. The apparatus according to claim 33, wherein the system configuration information is indicated by at least one of the following:

an indication field or a bit carried by the paging DCI; and
an indication field or a bit carried by the PDSCH scheduled by the paging DCI.

35. The apparatus according to claim 34, wherein each configuration parameter comprised in the system configuration information corresponds to N values; and

the paging DCI and/or the PDSCH scheduled by the paging DCI indicates a number of the configuration parameter;
or
the paging DCI and/or the PDSCH scheduled by the paging DCI indicates a value of the configuration parameter; wherein
N is an integer greater than or equal to 1.

36. The apparatus according to claim 33, wherein the sending module is specifically configured to:

send M paging DCIs to the terminal within a second time; wherein

the second time and M are predefined, and M is an integer greater than or equal to 1.

37. The apparatus according to claim 33, wherein the paging DRX configuration information comprises at least one of the following parameters:

   a DRX cycle;
   a PF;
   a PO;
   an offset; and
   an initial time of paging.

38. The apparatus according to claim 33, wherein the common signal comprises at least one of the following:

   a cell common PDCCH;
   a cell common PUCCH;
   a SIB 1;
   a CSI-RS; and
   an SRS.

39. A terminal, comprising a processor and a memory, wherein the memory stores a program or instructions capable of running on the processor, and when the program or instructions are executed by the processor, the steps of the information configuration method according to any one of claims 1 to 13 are implemented.

40. A network-side device, comprising a processor and a memory, wherein the memory stores a program or instructions capable of running on the processor, and when the program or instructions are executed by the processor, the steps of the information configuration method according to any one of claims 14 to 19 are implemented.

41. A readable storage medium, wherein the readable storage medium stores a program or instructions, and when the program or instructions are executed by a processor, the steps of the information configuration method according to any one of claims 1 to 13 are implemented, or the steps of the information configuration method according to any one of claims 14 to 19 are implemented.

FIG. 1

| RRC_IDLE | RRC_INACTIVE | RRC_CONNECTED |
|---|---|---|
| Unable to transmit data | Unable to transmit data | Have data transmission |
| No RRC context | RRC context setup | RRC context setup |
| No core network connection | Core network connection setup | Core network connection setup |
| Terminal-controlled mobility | Terminal-controlled mobility | Network-controlled mobility |

FIG. 2

FIG. 3

FIG. 4

Paging (paging) DCI

First time

Second time

FIG. 5

Start

A network-side device sends paging DCI to a terminal, where the paging DCI and/or a PDSCH scheduled by the paging DCI indicates system configuration information

601

End

FIG. 6

Information configuration apparatus

Receiving module — 710

700

Obtaining module — 720

FIG. 7

Information configuration apparatus

Sending module ⌐ 810

⌐ 800

FIG. 8

⌐ 900

Communication device

⌐ 901

Processor

⌐ 902

Memory

FIG. 9

FIG. 10

FIG. 11

<div align="center">**INTERNATIONAL SEARCH REPORT**</div>

| International application No. |
| --- |
| **PCT/CN2023/124459** |

### A. CLASSIFICATION OF SUBJECT MATTER

H04W72/12(2023.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 索引, 寻呼, 周期, 下行控制信息, 下行链路控制信息, 物理随机接入信道, 系统信息块, 同步信号测量时序, 探测参考信号, 信道状态信息参考信号, 非连续接收, 同步信号快, 物理下行控制信道, 物理上行控制信道, 配置, 寻呼机会, 寻呼帧, DCI, DRX, index, paging, period, PRACH, SIB, SMTC, SRS, SSB, CSI-RS, DRX, PDCCH, PUCCH, PO, PF

### C. DOCUMENTS CONSIDERED TO BE RELEVANT

| Category* | Citation of document, with indication, where appropriate, of the relevant passages | Relevant to claim No. |
| --- | --- | --- |
| X | WO 2022031136 A1 (LG ELECTRONICS INC.) 10 February 2022 (2022-02-10) description, paragraphs 86, 142-167, 181-186 and 295-302 | 1-41 |
| X | CN 113037444 A (VIVO COMMUNICATION TECHNOLOGY CO., LTD.) 25 June 2021 (2021-06-25) description, paragraphs 39-125 | 1-41 |
| X | US 2019306827 A1 (SAMSUNG ELECTRONICS CO., LTD.) 03 October 2019 (2019-10-03) description, paragraphs 55-96 | 1-41 |
| X | HUAWEI et al. "SI Update procedure" *3GPP TSG-RAN WG2 Meeting 101 R2-1803361*, 02 March 2018 (2018-03-02), section 2 | 1-41 |
| X | SAMSUNG. "SIB for NR access control information" *3GPP TSG-RAN WG2#102 R2-1808012*, 25 May 2018 (2018-05-25), section 2 | 1-41 |

☑ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 November 2023** | **24 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/124459**

| C. | DOCUMENTS CONSIDERED TO BE RELEVANT | |
|---|---|---|
| Category* | Citation of document, with indication, where appropriate, of the relevant passages | Relevant to claim No. |
| X | HUAWEI et al. "Assistance RS occasions for IDLE/inactive mode" *3GPP TSG RAN WG1 Meeting #104bis-e R1-2102317,* 20 April 2021 (2021-04-20), sections 2-4 | 1-41 |

Form PCT/ISA/210 (second sheet) (July 2022)

## INTERNATIONAL SEARCH REPORT
### Information on patent family members

International application No.

**PCT/CN2023/124459**

| Patent document cited in search report | | | Publication date (day/month/year) | Patent family member(s) | | | Publication date (day/month/year) |
|---|---|---|---|---|---|---|---|
| WO | 2022031136 | A1 | 10 February 2022 | EP | 4113883 | A1 | 04 January 2023 |
| | | | | JP | 2023522790 | A | 31 May 2023 |
| | | | | US | 2023032154 | A1 | 02 February 2023 |
| | | | | KR | 20220134579 | A | 05 October 2022 |
| | | | | CN | 116134794 | A | 16 May 2023 |
| CN | 113037444 | A | 25 June 2021 | WO | 2021129556 | A1 | 01 July 2021 |
| | | | | BR | 112022008577 | A2 | 09 August 2021 |
| | | | | KR | 20220117334 | A | 23 August 2021 |
| | | | | VN | 89384 | A | 26 September 2021 |
| | | | | IN | 202227042237 | A | 30 September 2021 |
| | | | | EP | 4068670 | A1 | 05 October 2021 |
| | | | | US | 2022330260 | A1 | 13 October 2021 |
| US | 2019306827 | A1 | 03 October 2019 | US | 2022116907 | A1 | 14 April 2022 |
| | | | | KR | 20190113671 | A | 08 October 2019 |
| | | | | WO | 2019190229 | A1 | 03 October 2019 |
| | | | | CN | 112042243 | A | 04 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211258304